# EUROPÄISCHE PATENTSCHRIFT

(11) **EP 0 628 071 B1**
(45) Veröffentlichungstag und Bekanntmachung des Hinweises auf die Patenterteilung: **25.03.1998**
(21) Anmeldenummer: 94902744.5
(22) Anmeldetag: 10.12.1993
(51) Int. Cl.: C12C 7/06

(54) **VORRICHTUNG ZUM AUFSCHLUSS VON STÄRKE- UND/ODER ZUCKERHALTIGEN ROHSTOFFEN**
DEVICE FOR HYDROLYSING STARCH- AND/OR SUGAR-CONTAINING RAW MATERIALS
DISPOSITIF D'HYDROLYSE DE MATIERES PREMIERES CONTENANT DE L'AMIDON ET/OU DU SUCRE

(30) Priorität: 11.12.1992 DE 4241801
(43) Veröffentlichungstag der Anmeldung: 14.12.1994
(73) Patentinhaber: Icking, Bernard, D-46325 Borken (DE)
(72) Erfinder: Icking, Bernard, D-46325 Borken (DE)
(74) Vertreter: Gustorf, Gerhard, Dipl.-Ing.
(86) Internationale Anmeldenummer: EP9303484
(87) Internationale Veröffentlichungsnummer: WO9413780

(56) Entgegenhaltungen:
- DE-A- 3 504 180
- DE-B- 1 061 726
- DE-B- 1 257 082
- GB-A- 934 143
- US-A- 2 309 989

## Beschreibung

Die Erfindung betrifft eine Vorrichtung zum Aufschluß von stärke- und/oder zuckerhaltigen Rohstoffen mit einer Zuführeinrichtung für den Rohstoff in hintereinander geschaltete Wärmetauscher und einer Entnahmeeinrichtung für das fertige Produkt.

Gegenstand der DE-PS 35 04 180 ist ein Verfahren zum kontinuierlichen Maischen von vornehmlich stärkehaltigen Rohstoffen. Um den für den Aufschluß benötigten Energiebedarf so gering wie möglich zu halten, wird die in dem aufgeschlossenen Produkt befindliche thermische Energie so weit wie möglich verwendet, wobei Enzyme den Abbau unterstützen. Bei dem Verfahren wird das aufzuschließende Produkt, beispielsweise Kartoffeln oder Getreide, in einer Mühle zerkleinert und über eine Dosierpumpe durch einen Gegenstromwärmetauscher geleitet. In diesem erfolgt eine Erwärmung mit Hilfe bereits erhitzter, schon wieder teilabgekühlter Maische auf eine Temperatur, die unterhalb der Verkleisterungstemperatur liegt.

Es kann nicht in allen Fällen verhindert werden, daß die in dem aufzuschließenden Rohstoff enthaltene Stärke die Verkleisterungstemperatur erreicht oder diese überschreitet, beispielsweise bei Störungen oder einem Ausfall der Pumpe oder bei Ablagerungen an den Tauschflächen des Wärmetauschers. Zu der erwähnten Vorrichtung ist ferner zu bemerken, daß sie aus mehreren, hintereinander geschalteten und unterschiedlich ausgebildeten Wärmetauschern besteht, die durch enge Rohrleitungen und Pumpen miteinander verbunden sind, um einen optimalen Wärmeaustausch zu ermöglichen und eine für den sicheren Aufschluß benötigte Verweildauer herzustellen.

Der Erfindung liegt daher die Aufgabe zugrunde, die Vorrichtung der eingangs umrissenen Bauart so auszubilden, daß mit einem geringstmöglichen technischen Aufwand ein optimaler Prozeßablauf ohne die Gefahr von Störungen, insbesondere durch Verkleistern, gewährleistet wird.

Bei der gattungsgemäßen Vorrichtung wird diese Aufgabe erfindungsgemäß dadurch gelöst, daß die Wärmetauscher als in einer vertikalen Säule übereinander angeordnete, mit Böden versehene Kammern ausgebildet sind, die durch im jeweiligen Boden vorgesehene Überströmöffnungen für den aufzuschließenden Rohstoff miteinander verbunden sind und Rührorgane zum Durchmischen des Rohstoffes haben.

Diese Vorrichtung hat gegenüber dem Stand der Technik den wesentlichen Vorteil, daß die gesamte, bisher benötigte Anlage in einem einzigen, als Säule ausgebildeten Behälter untergebracht ist, in welchem der Aufschluß kontinuierlich von oben nach unten erfolgt, wobei aufgrund der Schwerkraftförderung der Pumpenaufwand auf nur eine Pumpe beschränkt ist und keine zusätzlichen Eingriffe von außen notwendig sind. Herkömmliche Wärmeaustauscher benötigen für einen guten Wärmeaustausch verhältnismäßig schmale Durchlaufkanäle, die bei der erfindungsgemäß vorgesehenen Lösung entfallen können. Da das aufzuschließende Produkt von oben nach unten kein Rohrsystem durchläuft, ist die Gefahr von Infektionen, die in solchen engen Rohren auftreten können, vermieden. Die in den Kammern vorgesehenen Rührorgane durchmischen die Rohstoffe ständig, wodurch einer Verkleisterung entgegengewirkt wird.

In Weiterbildung der Erfindung ist vorgesehen, daß die Überströmöffnungen in Rohrstutzen münden, die vom jeweiligen Boden nach unten in die nachgeschaltete Kammer ragen. Auf diese Weise stellt sich in jeder Kammer ein maximaler Füllungspegel ein, der durch das untere Ende des Rohrstutzens definiert ist und nicht überschritten werden kann. Damit wird eine Berührung der Füllung mit dem Boden der jeweils darüberliegenden Kammer vermieden, so daß die Temperaturen in den einzelnen Kammern nicht beeinträchtigt werden. Vielmehr bildet sich über dem Produktspiegel ein Luftpolster, das eine Wärmeisolierung zu dem Boden der darübeliegenden Kammer darstellt.

Dieser Effekt wird noch dadurch verstärkt, daß der Boden jeder Kammer konkav gewölbt ist.

Eine konstruktiv sehr einfache und günstige Lösung wird dadurch errreicht, daß jede Kammer ein Rührorgan hat, das an einer allen Rührorganen gemeinsamen, vertikalen Antriebswelle befestigt ist, die durch die Überströmöffnungen hindurchläuft.

Nach einem weiteren Merkmal der Erfindung ist an die unterste Kammer mit dem höchsten Temperaturniveau eine Entnahmepumpe für das aufgeschlossene Produkt angeschlossen, deren Druckleitung als Wärmeabgabeleitung im Gegenstrom durch die übereinanderliegenden Kammern nach oben und zu der Entnahmeeinrichtung für das fertige Produkt führt.

Auf diese Weise wird das aufgeschlossene Produkt zum Zweck der Wärmeenergieabgabe im Gegenstrom von unten nach oben durch die einzelnen Kammern gepumpt, so daß der Einsatz von Fremdenergie auf ein unbedingt notwendiges Minimum verringert ist. Der Wärmeinhalt wird in Schritten bis zum Mittelwert der Temperatur des jeweils aus der darüberliegenden Kammer zufließenden, aufzuschließenden Produktes sowie der Temperatur des bereits aufgeschlossenen, aus der darunterliegenden Kammer kommenden Produktes ausgetauscht. Somit kann mit einem einzigen Apparat ohne komplizierte Regelung der gesamte Aufschlußprozeß durchgeführt werden. Es ist selbstverständlich auch möglich, zur Erhöhung der Durchsatzleistung weitere parallelgeschaltete Wärmeabgabesysteme in den Kammern anzubringen, von denen jeder von einer eigenen Pumpe gespeist wird.

Um das erforderliche Wärmegefälle zu erreichen, muß vielfach lediglich in der letzten Stufe eine bestimmte Fremdenergiemenge zugeführt werden. Zu diesem Zweck ist in der untersten Kammer eine Heizschlange mit Fremdenergiezufuhr angeordnet. Hierfür kann beispielsweise Frischdampf oder heiße Schlempe eingesetzt werden, die in Brennereien bei der Destillation anfällt.

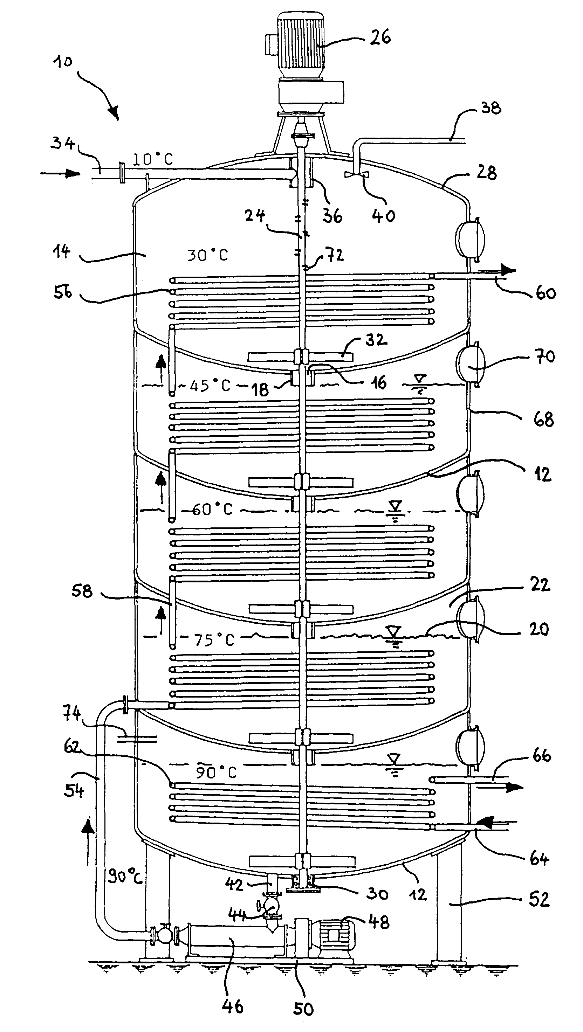

Die Erfindung ist nachstehend an einem Ausführungsbeispiel erläutert, das in der Zeichnung dargestellt ist. Diese zeigt im Vertikalschnitt eine Vorrichtung, wie sie beispielsweise zur Maischeherstellung in einer Brennerei eingesetzt werden kann.

Wie die einzige Figur zeigt, besteht die Vorrichtung gemäß der Erfindung im wesentlichen aus einem als Säule ausgebildeten, zylindrischen Behälter 10, der durch konkav gewölbte Böden 12 in einzelne, übereinanderliegende Kammern 14 unterteilt ist. Die Kammern 14 sind durch Überströmöffnungen 16 miteinander verbunden, wobei jede Öffnung 16 mittig in den zugehörigen Boden 12 eingearbeitet ist. Jede Überströmöffnung 16 mündet in einen Rohrstutzen 18, der vom jeweiligen Boden 12 nach unten in die nachgeschaltete Kammer 14 ragt. Durch das untere Ende jedes Rohrstutzens 18 ist in noch zu beschreibender Weise der maximale Füllungspegel 20 in der entsprechenden Kammer 14 festgelegt. Zwischen diesem Füllungspegel 20 und dem darüberliegenden Boden 12 baut sich in jeder Kammer 14 ein Luftpolster 22 auf. Dieses hat nicht nur die Funktion einer Wärmedämmung, sondern dient zum Aufbau eines Druckes, der die Bodenbelastung der darüberliegenden Kammer 14 aufnimmt.

Durch die zentrischen Überströmöffnungen 16 hindurch verläuft eine vertikale Antriebswelle 24, die von einem Motor 26 in Drehung versetzt wird, der auf der Decke 28 des Behälters 10 angebracht ist. Das untere Ende der Antriebswelle 24 ist in einem Lager 30 drehbar gelagert, welches im Boden 12 der untersten Kammer 14 eingebaut ist. Über dem Boden 12 jeder Kammer 14 ist an der Antriebswelle 24 ein Rührorgan 32 befestigt, das aus an sich bekannten Rührflügeln besteht, die für ein gutes Durchmischen des Produktes innerhalb der jeweiligen Kammer 14 sorgen, bevor dieses aufgrund seiner Schwerkraft abfließt. durch die Überströmöffnung 16 und den Rohrstutzen 18 in die darunterliegende Kammer 14.

Durch die Decke 28 der obersten Kammer 14 führt ein von einer nicht gezeigten Zuführeinrichtung, beispielsweise einer Pumpe kommendes, im wesentlichen waagrechtes Rohr 34 radial in einen Zuführstutzen 36, der an der Unterseite der Decke 28 mittig angebracht und nach unten offen ist.

Durch die Decke 28 führt ferner eine Leitung 38 zum Zuführen von Reinigungsflüssigkeit, die im Bedarfsfall durch einen Sprühkopf 40 in der oberen Kammer 14 gleichmäßig verteilt werden kann. Alternativ ist es möglich und vorteilhaft, die Antriebswelle 24 hohl auszubilden und mit Sprühdüsen 72 zu versehen, durch die bei vorübergehenden Stillsetzung der Vorrichtung eine Reinigungs- und Desinfekionsflüssigkeit in die oberen Kammern 14 gesprüht werden kann, die aufgrund der geringen Temperatur am meisten infektionsgefährdet sind.

An den Boden 12 der untersten Kammer 14 ist im Bereich des tiefsten Punktes ein Abgaberohr 42 mit einem Sperrschieber 44 angeschlossen, des in den Eingangsanschluß einer Entnahmepumpe 46 führt. Die Entnahmepumpe, welche von einem Motor 48 angetrieben wird, ist unter dem Behälter 10 auf einer Bodenplatte 50 zwischen den vertikalen Füßen 52 des Behälters 10 angebracht. Von der Entnahmepumpe 46 führt eine Druckleitung 54 in die über der untersten Kammer liegende Kammer 14, wo sie in eine spiralförmige Wärmeabgabeleitung (Wärmespirale 56) übergeht. Die Wärmespirale 56 ist über eine vertikale Verbindungsleitung 58 mit einer weiteren Wärmespirale 56 in der darüberliegenden Kammer 14 verbunden. Dieses System der Wärmespiralen 56 mit Verbindungsleitungen 58 setzt sich bis zur obersten Kammer 14 fort, so daß die Kammern 14 als hintereinandergeschaltete Wärmetauscher wirken.

Von der Wärmespirale 56 der obersten Kammer 14 führt eine horizontale Abgabeleitung 60 zu einer nicht weiter gezeigten Entnahmeeinrichtung für die Weiterverarbeitung des aufgeschlossenen Fertigproduktes.

In der untersten Kammer 14 ist eine Heizschlange 62 angeordnet, die mit einer Zuführleitung 64 und einer Rückführleitung 66 für ein Heizmedium verbunden ist. Als Heizmedium kann beispielsweise Frischdampf oder heiße, von einer Destillationsanlage kommende Schlempe verwendet werden.

In der Figur ist ferner zu erkennen, daß die Seitenwand 68 jeder Kammer 14 ein Mannloch 70 hat, das in bekannter Weise zur Inspektion und Reparatur dient. Schließlich ist, was nicht weiter dargestellt ist, jede Kammer 14 mit Sonden zum Messen der Temperatur, des Druckes oder anderer Prozeßwerte und mit Zuführorganen zum Zuführen von Enzymen oder dgl. versehen. Auf diese Weise kann in jeder Kammer 14 ein bestimmter Bearbeitungsschritt durchgeführt werden, der bestimmte Temperaturverhältnisse erfordert, beispielsweise die pH-Regulierung oder Enzymdosierung in der oberesten Kammer 14, der Eiweißabbau in der darauf folgenden Kammer, die Eindosierung Stärke abbauender Enzyme und Verflüssigung in den beiden nächsten Kammer, sowie die Endaufheizung und der endgültige Aufschluß in den letzten Kammern.

Die Funktion der Vorrichtung wird nachstehend am Beispiel der Figur näher erläutert.

Über das Rohr 34 gelangt das aufzuschließende Produkt, beispielsweise Kartoffeln, Getreide, Rüben, Topinambur o. dgl., das zuvor fein vermahlen wurde, in den Zuführstutzen 36, aus dem es vertikal nach unten in die oberste Kammer 14 fällt. In dieser Kammer wird das Rohprodukt von 10° C durch die Wärmespirale 56, durch die das bereits aufgeschlossene, verflüssigte Fertigprodukt fließt, auf 30° C erwärmt. Das Fertigprodukt selbst strömt mit etwa 32° C aus der obersten Wärmespirale 56 in die Abgabeleitung 60.

Innerhalb der obersten Kammer 14 wird das Produkt durch das Rührorgan 32 gut durchmischt, so daß im Bereich des Bodens 12 das auf 30° C erwärmte Produkt durch den Rohrstutzen 18 in die darunterliegende Kammer 14 gelangt. In dieser Kammer wird das Produkt durch die dort befindliche Wärmespirale 56 auf 45° C erwärmt und durch das Rührorgan 32 erneut durchmischt. In den beiden folgenden Kammern erfolgt eine Erwärmung auf 60° C bzw. 75° C. Als Wärmeabgabemedium dient auch hier das durch die Wärmespiralen 56 gepumpte, bereits aufgeschlossene, verflüssigte Produkt.

In der untersten Kammer 14 erfolgt eine Aufheizung des Produktes auf 90° C, worauf dieses über das Abgaberohr 42 in die Entnahmepumpe 46 gelangt, welche das nun flüssige Produkt über die Druckleitung 54 nacheinander durch die einzelnen Wärmespiralen 56 fördert.

Um einen noch besseren Aufschluß des Produktes zu erreichen, kann nach einer nicht dargestellten Weiterbildung der Erfindung an die unterste Kammer 14 eine trichterförmige Verweilstrecke angebaut sein, in die das Produkt durch die Überströmöffnung der untersten Kammer 14 gelangt. Dort verweilt das Produkt noch bei dem hohen Temperaturniveau, so daß die Enzyme etwas länger (ca. 15 Min.) einwirken können. Das Produkt wird auf diese Weise noch dünnflüssiger und fließt kontinuierlich über den Trichterauslaß ab, der entsprechend dem Abgaberohr 42 ausgebildet und an die Entnahmepumpe 46 angeschlossen ist.

In der Figur ist angedeutet, daß in die unterste Kammer 14 eine Leitung 74 führt, durch die ein Gas, z.B. Luft oder CO₂, eingeleitet wird, das die erwähnten "Luftpolster" 22 bildet, sofern durch das aufzuschließende Produkt nicht genügend Gas zur Bildung der Luftpolster eingebracht wird.

Während des erläuterten Prozesses wird das Produkt durch die Rührorgane 32 ständig in einen intensiven Kontakt mit den Tauschflächen der Wärmespiralen 56 gebracht. Nur das aufgeschlossene und dann sehr dünnflüssige Produkt wird durch die Entnahmepumpe 56 zum Zweck der Wärmeenergieabgabe im Gegenstrom von unten nach oben durch die Wärmespiralen 56 der einzelnen Kammern 14 gepumpt. Da der Behälter 10 in einzelne Kammer 14 unterteilt ist, wird ein Durchschlüpfen von nicht aufgeschlossenem Material verhindert. Weil der Weg des aufzuheizenden Produktes ausschließlich durch bewegte Massen in den einzelnen Kammern führt, kann der Eintritt der Stärke in den Verkleisterungszustand nicht zu Betriebsstörungen führen, denn in den jeweiligen Kammern befinden sich immer große Mengen bereits verflüssigten Materials, unter das die verkleisternde Stärke untergerührt wird und das dann nach wenigen Minuten enzymatisch verflüssigt. In vorteilhafter Weise werden bereits in der ersten Stufe Enzyme beigemischt, so daß keine Eiweißausfällung zu befürchten ist, die zu einer Verkleisterung der Wärmespiralen führen könnte.

Durch die Prozeßführung von oben nach unten steigt die Temperatur in gleicher Richtung an. Weil bei kontinuierlichem Ablauf des Prozesses die Kammern 14 immer bis zu dem maximalen Füllungspegel 20 gefüllt sind, baut sich bei steigernder Temperatur auch ein immer höherer, der Dichte des Produktes entsprechender Druck auf. In der oberen, drucklosen Kammer ist die niedrigste Temperaturstufe. Auf diese Weise wird ein Ausdampfen des Produktes wirksam verhindert. Bei dem Ausführungsbeispiel sind fünf Kammern hintereinandergeschaltet, so daß sich eine insgesamt längere Verweilzeit ergibt, die eine gute Durchmischung begünstigt. Die Wärmespiralen 56 der untereinander gleich ausgebildeten Kammern 14 sind identisch konstruiert, was sich sehr vorteilhaft auf die Konstruktion auswirkt.

Ein weiterer Vorteil der Vorrichtung gemäß der Erfindung besteht darin, daß der Prozeß des Aufschlusses ohne komplizierte Prozeßsteuerung kontinuierlich und automatisch abläuft. Die Temperaturen stellen sich aufgrund des Wärmetausches weitgehend von selbst ein. Lediglich die Leistung der Entnahmepumpe 46, welche das aufbereitete Produkt durch die Wärmespiralen 56 der einzelnen Stufen fördert, muß auf die durch das Rohr 34 laufend eingebrachte Menge abgestimmt sein, um das Niveau in dem Behälter 10 auf einem gleichbleibendem Stand zu halten. Eine Unterbrechung und Wiederaufnahme des Prozesses ohne längere Abund Anfahrzeiten ist jederzeit möglich. Für eine Betriebsunterbrechung wird durch Unterbrechung der Rohstoffzufuhr durch das Rohr 34 die oberste Kammer 14 leergefahren. Beim Stillstand der Vorrichtung findet dann automatisch eine Temperaturanhebung von unten nach oben statt, so daß sich schließlich in der von oben zweiten Kammer 14 eine Temperatur einstellt, die über der infektionsgefährdenden Temperatur liegt.

## Patentansprüche

1. Vorrichtung zum Aufschluß von stärke- und/oder zuckerhaltigen Rohstoffen, insbesondere Maische, mit einer Zuführeinrichtung für den Rohstoff in hintereinandergeschaltete Wärmetauscher und einer Entnahmeeinrichtung für das fertige Produkt, dadurch gekennzeichnet, daß die Wärmetauscher als in einer vertikalen Säule übereinander angeordnete, mit Böden (12) versehene Kammern (14) ausgebildet sind, die durch im jeweiligen Boden (12) vorgesehene Überströmöffnungen (16) für den aufzuschließenden Rohstoff miteinander verbunden sind und Rührorgane (32) zum Durchmischen des Rohstoffes haben.

2. Vorrichtung nach Anspruch 1, dadurch gekennzeichnet, daß die Überströmöffnungen (16) in Rohrstutzen (18) münden, die vom jeweiligen Boden (12) nach unten in die nachgeschaltete Kammer (14) ragen.

3. Vorrichtung nach Anspruch 1 oder 2, dadurch gekennzeichnet, daß der Boden (12) jeder Kammer (14) konkav gewölbt ist.

4. Vorrichtung nach einem der vorhergehenden Ansprüche, dadurch gekennzeichnet, daß jede Kammer (14) ein Rührorgan (32) hat, das an einer allen Rührorganen (32) gemeinsamen, vertikalen Antriebswelle (24) befestigt ist, die durch die Überströmöffnungen (16) hindurchläuft.

5. Vorrichtung nach Anspruch 4, dadurch gekennzeichnet, daß die Antriebswelle (24) hohl ist und Sprühdüsen zum Einleiten einer Reinigungs- und Desinfektionsflüssigkeit in die bei Betriebsunterbrechung leeren Kammern (14) aufweist.

6. Vorrichtung nach einem der vorhergehenden Ansprüche, dadurch gekennzeichnet, daß die Überströmöffnung (16) der untersten Kammer (14) mit dem höchsten Temperaturniveau in eine trichterförmige Verweilstrecke für das aufgeschlossene Produkt mündet.

7. Vorrichtung nach einem der vorhergehenden Ansprüche, dadurch gekennzeichnet, daß an die Verweilstrecke bzw. an die unterste Kammer (14) mit dem höchsten Temperaturniveau eine Entnahmepumpe (46) für das aufgeschlossene Produkt angeschlosen ist, deren Druckleitung (54) als Wärmeabgabeleitung (56) im Gegenstrom durch die übereinanderliegenden Kammern (14) nach oben und zu einer Abgabeleitung (60) für das fertige Produkt führt.

8. Vorrichtung nach Anspruch 7, dadurch gekennzeichnet, daß in der untersten Kammer (14) eine Heizschlange (62) mit Fremdenergiezufuhr angeordnet ist.

9. Vorrichtung nach einem der vorhergehenden Ansprüche, dadurch gekennzeichnet, daß in die unterste Kammer (14) eine Leitung (74) zum Einspeisen von Gas für die Bildung von Luftpolstern (22) in den Kammern (14) führt.

## Claims

1. Apparatus for hydrolysing starch- and/or sugar-containing raw materials, in particular mash, having a device for supplying the raw material to heat exchangers connected in series and a discharge device for the finished product, characterised in that the heat exchangers are in the form of chambers (14) with bases (12), the chambers being arranged one above the other in a vertical column, and being connected by overflow openings (16) in the respective base (12) for the raw material which is to be hydrolysed, and having stirring members (32) for mixing the raw material.

2. Apparatus according to claim 1, characterised in that the overflow openings (16) discharge into tubular nozzles (18) which project downwards from the respective base (12) into the chamber connected downstream (14).

3. Apparatus according to claim 1 or 2, characterised in that the base (12) of each chamber (14) is concave.

4. Apparatus according to any one of the preceding claims, characterised in that each chamber (14) has a stirring member (32) which is fixed to a vertical drive shaft (24) common to all the stirring members (32), which runs through the overflow openings (16).

5. Apparatus according to claim 4, characterised in that the drive shaft (24) is hollow and has spray nozzles to direct a cleaning and disinfecting fluid into the empty chambers (14) when operation is stopped.

6. Apparatus according to any one of the preceding claims, characterised in that the overflow opening (16) of the lowest chamber (14) with the highest temperature level, discharges into a funnel-shaped delaying space for the hydrolysed product.

7. Apparatus according to any one of the preceding claims, characterised in that the delaying space and the lowest chamber (14) with the highest temperature level respectively are connected to an extraction pump (46) for the hydrolysed product, the force pipe (54) of which pump leads upwards as a heat dissipator (56) in countercurrent through the chambers (14) arranged on top of each other and to a discharge pipe (60) for the finished product.

8. Apparatus according to claim 7, characterised in that a heating coil (62) with external energy supply is arranged in the lowest chamber (14).

9. Apparatus according to any one of the preceding claims, characterised in that a supply pipe for gas (74) leads into the lowest chamber (14) for the formation of air cushions (22) in the chambers (14).

## Revendications

1. Dispositif d'hydrolyse de matières premières contenant de l'amidon et/ou du sucre, notamment de moût, avec un dispositif d'amenée de la matière première dans des échangeurs de chaleur montés en série et un dispositif de prélèvement du produit fini, caractérisé par le fait que les échangeurs de chaleur ont la forme de chambres (14) superposées de manière à constituer une colonne verticale, équipées de fonds (12), reliées par des ouvertures de trop-plein (16) pour la matière première à hydrolyser prévues dans chaque fond (12), et équipées d'agitateurs (32) destinés à mélanger la matière première.

2. Dispositif conformément à la revendication 1, caractérisé par le fait que les ouvertures de trop-plein (16) donnent sur des tubulures (18) dirigées de chaque fond (12) vers la chambre immédiatement inférieure (14).

3. Dispositif conformément à la revendication 1 ou 2, caractérisé par le fait que le fond (12) de chaque chambre (14) est de forme concave.

4. Dispositif conformément à l'une des revendications précédentes, caractérisé par le fait que chaque chambre (14) est équipée d'un agitateur (32) fixé à un arbre vertical d'entraînement (24), commun à tous les agitateurs (32), traversant les ouvertures de trop-plein (16).

5. Dispositif conformément à la revendication 4, caractérisé par le fait que l'arbre d'entraînement (24) est creux et présente des buses de distribution destinées à introduire un liquide de nettoyage et de désinfection dans les chambres (14) vides en fin d'utilisation.

6. Dispositif conformément à l'une des revendications précédentes, caractérisé par le fait que l'ouverture de trop-plein (16) de la chambre inférieure (14) comportant le niveau de température le plus élevé est dirigée vers un tronçon de maturation en forme d'entonnoir destiné à recevoir le produit hydrolysé.

7. Dispositif conformément à l'une des revendications précédentes, caractérisé par le fait qu'une pompe de prélèvement (46) du produit hydrolysé est raccordée au tronçon de maturation ou à la chambre inférieure (14) comportant le niveau de température le plus élevé, dont la ligne de refoulement (54) sert de ligne de transfert de chaleur (56) et conduit à contre-courant à travers les chambres superposées (14) vers le haut et vers une ligne de restitution (60) du produit fini.

8. Dispositif conformément à la revendication 7, caractérisé par le fait qu'un serpentin de chauffage (62) alimenté par une source d'énergie extérieure est disposé dans la chambre la plus basse (14).

9. Dispositif conformément à l'une des revendications précédentes, caractérisé par le fait qu'une ligne (74) conduit dans la chambre la plus basse (14) pour injecter du gaz destiné à former des coussins d'air (22) dans les chambres (14).
